# EUROPÄISCHE PATENTANMELDUNG

(11) **EP 2 286 976 A1**
(43) Veröffentlichungstag der Anmeldung: **23.02.2011**
(21) Anmeldenummer: 10008493.8
(22) Anmeldetag: 14.08.2010
(51) Int. Cl.: B29C 45/14, B08B 17/06, B60H 1/00

(54) **Lüfter**

(30) Priorität: 17.08.2009 DE 102009037769
(71) Anmelder: Ebm-Papst St. Georgen GmbH & CO. KG, 78112 St. Georgen (DE)
(72) Erfinder: Denner, Stefan, 78112 St. Georgen (DE)
(74) Vertreter: Raible, Tobias

(57) **Zusammenfassung**

Ein Lüfter mit einer aus einem thermoplastischen Kunststoff gebildeten Komponente (66; 72) ist erhältlich durch einen Prozess, der folgende Schritte aufweist:
Eine die Form dieser Komponente (66; 72) bestimmende Kavität (43) eines Spritzgusswerkzeugs (10, 12) wird mindestens bereichsweise mit einer Lösung (24) aus Nanopartikeln (19) und einem Lösungsmittel benetzt. Von den benetzten Stellen lässt man das Lösungsmittel verdampfen, wobei die Nanopartikel (19) an der Wand der Kavität (43) haften bleiben. Das Spritzgusswerkzeug (10, 12) wird geschlossen. In die Kavität (43) wird der thermoplastische Kunststoff (42) eingespritzt, wobei sich die Nanopartikel beim Erstarren des Kunststoffs in dessen Oberfläche einbinden. Die Komponente, in deren Oberfläche mindestens bereichsweise die Nanopartikel (19) eingebunden sind, wird der Kavität (43) entnommen.

## Beschreibung

Die Erfindung betrifft einen Lüfter mit einer Kunststoffkomponente.

Solche Lüfter arbeiten oft in Umgebungen, in denen viel Staub vorhanden ist, und dieser Staub setzt sich dann im Lüfter fest, was eine häufige Reinigung erforderlich macht.

Deshalb ist es eine Aufgabe der Erfindung, einen neuen Lüfter bereit zu stellen.

Nach der Erfindung wird diese Aufgabe gelöst durch einen Lüfter nach dem Patentanspruch 1. Durch die Nanopartikel auf der Oberfläche der behandelten Komponente oder Komponenten erreicht man, dass diese Oberfläche Staub besser abweist, wodurch sich eine längere Standzeit des Lüfters ohne Reinigung ergibt.

Ein solcher Lüfter kann auch sehr einfach durch Abspritzen mit Wasser gereinigt werden, da das Wasser von einer solchen behandelten Oberfläche abperlt und dabei Staub, der z.B. am Lüfterrad haftet, vollständig mitnimmt, so dass eine sehr einfache Reinigung mit einem umweltfreundlichen Mittel möglich ist. Vorteilhaft ist auch, dass eine Lackierung der betreffenden Komponente entfallen kann.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen. Es zeigt:
- Fig. 1: eine Darstellung, welche schematisch das Benetzen einer Spritzgussform 10, 12 mit einer Lösung von Nanopartikeln 19 zeigt,
- Fig. 2: eine Darstellung analog Fig. 1, welche das Benetzen der Form 10 mit einer Nanolösung 24 zeigt,
- Fig. 3: das Einspritzen eines geeigneten Kunststoffs in die geschlossene Form 10, 12,
- Fig. 4: das gespritzte Teil mit seiner Beschichtung aus Nanopartikeln, welche Beschichtung aus Gründen der Verständlichkeit enorm übertrieben dargestellt ist,
- Fig. 5: ein Flussdiagramm, welches schematisch den beschriebenen Ablauf zeigt,
- Fig. 6: eine raumbildliche Darstellung eines Lüftergehäuses aus Kunststoff, und
- Fig. 7: eine raumbildliche Darstellung eines Lüfterrades mit einer Nanobeschichtung.

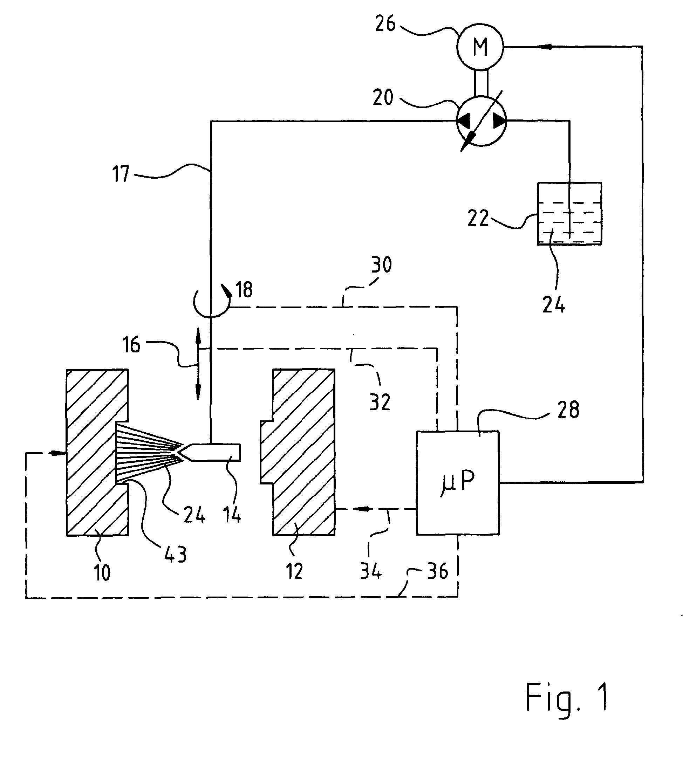

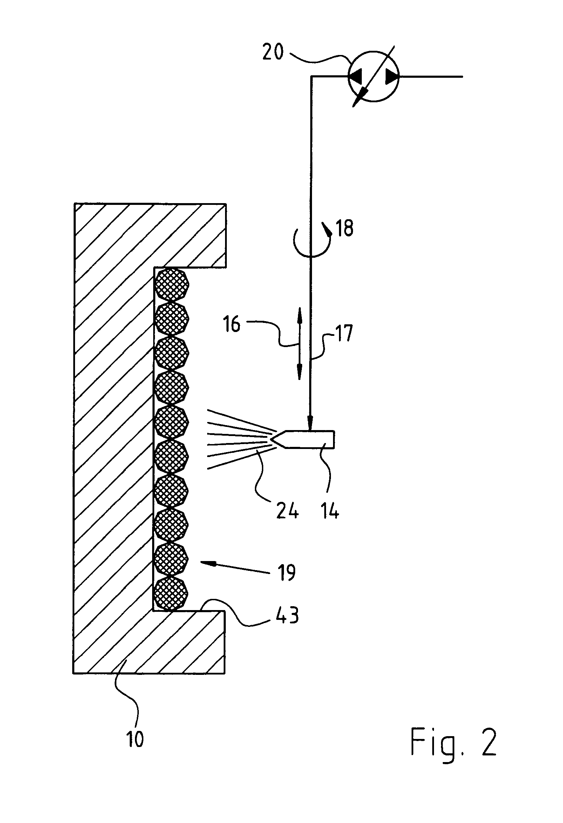

Die **Fig. 1** und **Fig. 2** zeigen eine geöffnete Spritzgussform mit den Teilen 10, 12 in sehr schematisierter Weise.

Zwischen den Teilen 10, 12 befindet sich ein Sprühkopf 14, der wie dargestellt in Achsrichtung 16 und in Drehrichtung 18 beweglich ist. Über eine Leitung 17 und eine Pumpe 20 ist er an einen Vorratsbehälter 22 angeschlossen, in welchem sich eine Nanolösung 24 befindet. Als Nanolösung eignen sich die verschiedenen im Handel befindlichen Nanolösungen.

Zum Antrieb der Pumpe 20 dient ein Elektromotor 26, der von einem Mikroprozessor (µP) 28 gesteuert wird. Letzterer steuert über eine Wirkverbindung 30 auch die Drehbewegung 18 und über eine Wirkverbindung 32 die axiale Bewegung 16 des Sprühkopfs 14. Ferner steuert der µP 28 über zwei Wirkverbindungen 34, 36 die Öffnungs- und Schließbewegungen der Spritzgussform 10, 12.

### Arbeitsweise

Vor der Herstellung einer Lüfterkomponente wird die leere Spritzgussform 10, 12 geöffnet, und der Sprühkopf 14 wird durch eine axiale Bewegung 16 zwischen die Teile 10, 12 gebracht. Der Motor 26 wird eingeschaltet, so dass die Pumpe 20 den Sprühkopf 14 mit Nanolösung 24 versorgt und dieser die Form 10 auf ihrer Innenseite mit der Nanolösung 24 benetzt, wobei der Sprühkopf 14 entsprechende Bewegungen 18 ausführt, um die Benetzung der gewünschten Stellen zu bewirken.

Ist die Form 10 an den gewünschten Stellen benetzt, so wird der Sprühkopf 14 in Richtung des Pfeiles 16 nach oben gefahren, und man lässt die Form 10 austrocknen.

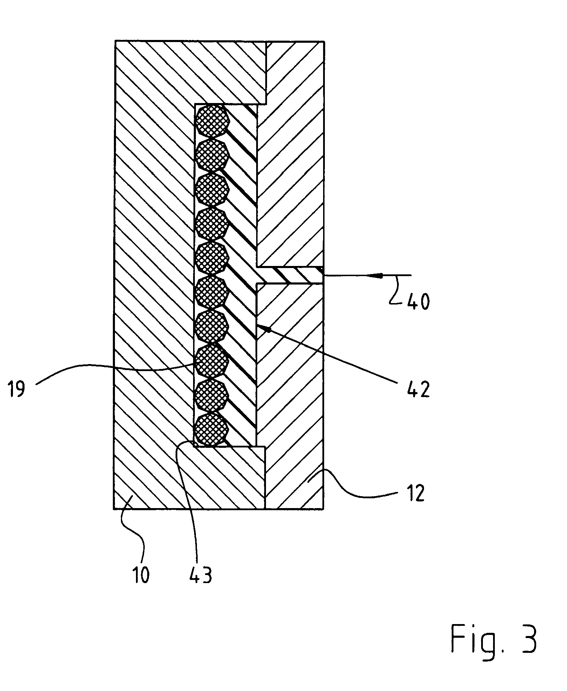

Dann werden die Teile 10, 12 geschlossen, wie das **Fig. 3** zeigt, und über eine Leitung 40 wird Kunststoff 42 in die Kavität 43 der Form 10, 12 eingespritzt, um eine Lüfterkomponente zu erzeugen. Die Nanopartikel 19 in der Kavität 43 verbinden sich dabei mit der Oberfläche des eingespritzten Kunststoffs 42, wodurch diese Oberfläche Staub abweisend wird.

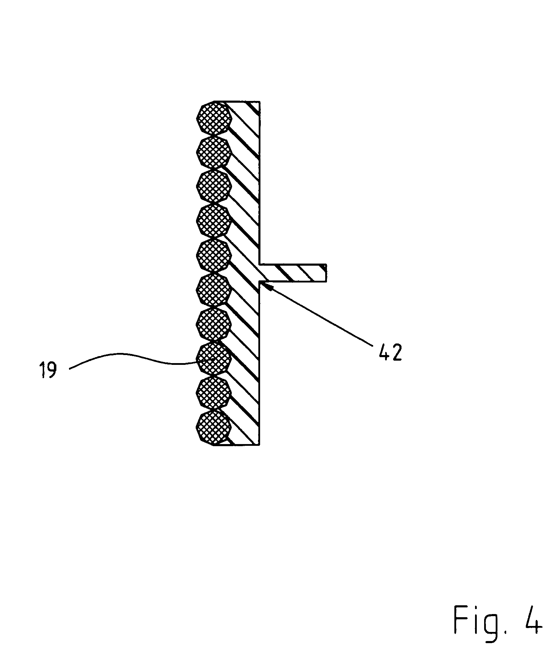

Anschließend wird die Form 10, 12 geöffnet, und die Lüfterkomponente 42 mit ihrer Nanobeschichtung 19 wird der Kavität 43 entnommen, vgl. **Fig. 4****..**

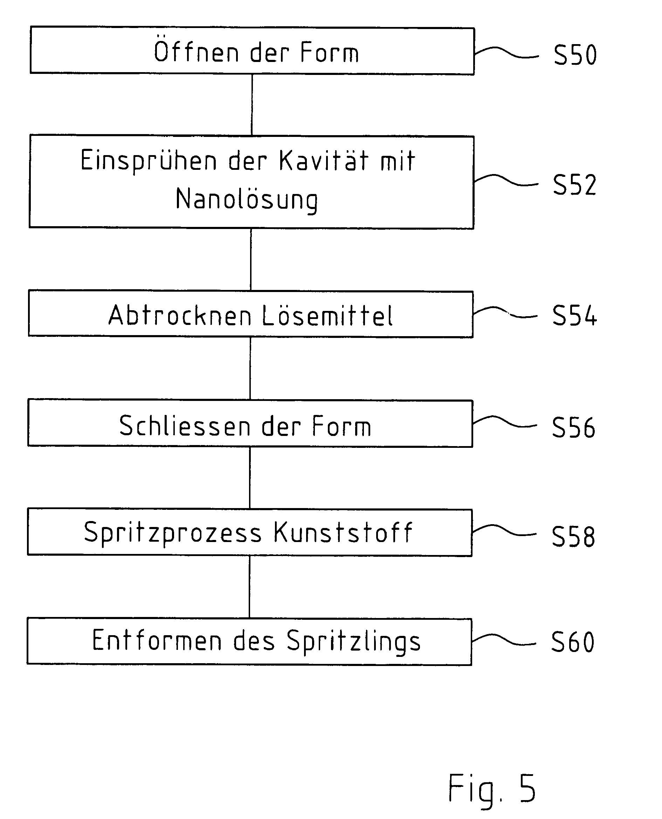

**Fig. 5** zeigt nochmals den Ablauf:
Im Schritt S50 wird die Form 10, 12 geöffnet.
Im Schritt S52 wird die Kavität 43 mit der Nanolösung 24 besprüht.
Im Schritt S54 lässt man das Lösungsmittel, z.B. Propanol abtrocknen.
Im Schritt S56 wird die Form 10, 12 geschlossen.
im Schritt S58 wird durch die Leitung 40 der Kunststoff 42 in die Kavität 43 eingespritzt.
Im Schritt S60 wird das Werkzeug 10, 12 geöffnet, und das gespritzte Werkstück 42 mit seiner Nanobeschichtung 19 wird der Kavität 43 entnommen.

Erfolgreiche Versuche wurden z.B. mit der Nanolösung "VP Disp. LE 5315X" der Fa. Evonik Degussa GmbH, Hanau, Deutschland durchgeführt. Diese Nanolösung enthält Silanamin, 1,1,1-Trimethyl-N-(trimethylsilyl)-, Hydrolyseprodukte mit Siliciumdioxid und 2-Propanol. Der Siedepunkt von 2-Propanol liegt bei 82 °C. Die Nanolösung wurde in die Kavität für den Spritzguss des Rotors gesprüht, und als Spritzmaterial für den Rotor wurde Polyamid (PA) verwendet. Es ist z.B. auch die Verwendung von PA 66 (Polyamid 66) oder PA 66 GF 30 möglich, einem Polyamid 66 mit 30 % Glasfaserzusatz. Die Nanopartikel waren nach dem Spritzvorgang fest in die Oberfläche des Lüfterradmaterials eingebaut. Wassertropfen sind von dem Lüfterrad abgeperlt, und dabei wurde auch zuvor aufgebrachter Staub von den Lüfterflügeln entfernt. Der Kontaktwinkel von Wasser auf der Oberfläche der Lüfterflügel betrug bei der Verwendung von Polyamid ohne Nanopartikel ca. 60 °, bei der Verwendung von Polyamid mit Nanopartikeln ca. 160 °.

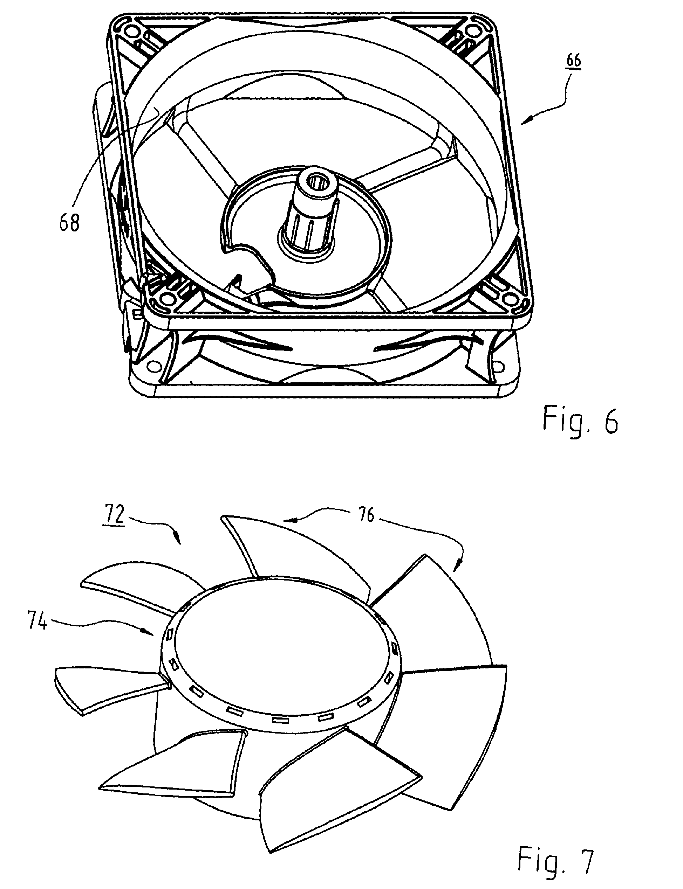

**Fig. 6** zeigt eine Lüfterkomponente in Form eines Lüftergehäuses 66 aus Kunststoff. Dieses hat eine Ausnehmung 68, welche hier die Form eines Venturikanals hat, durch welchen im Betrieb die vom Lüfter geförderte Luft strömt, was dort bisher häufig zu Staubablagerungen führte.

Deshalb wird hier die Wand des Venturikanals 68 mit einer Nanobeschichtung versehen, die so dünn ist, dass sie zeichnerisch nicht dargestellt werden kann. Bei Verwendung einer solchen Nanobeschichtung setzt sich dort wesentlich weniger Staub und Schmutz ab, und eine trotzdem notwendige Reinigung wird wesentlich erleichtert.

**Fig. 7** zeigt eine Lüfterkomponente in Form eines Lüfterrades 72. Dieses hat eine Nabe 74 aus Kunststoff, an deren Peripherie hier sieben Lüfterflügel 76, ebenfalls aus Kunststoff, vorgesehen sind.

In diesem Fall wird die Außenseite der Nabe 72 mit einer (zeichnerisch nicht darstellbaren) Nanobeschichtung versehen, und ebenso werden die Flügel 76 auf beiden Seiten in der beschriebenen Weise mit einer Nanobeschichtung versehen, um die Ablagerung von Schmutz und Staub auf den Flügeln 76 zu reduzieren.

Zur Reinigung genügt es in vielen Fällen, etwas Wasser in den rotierenden Lüfter einzuspritzen, da sich hierdurch der Schmutz von den behandelten Oberflächen löst, so dass er leicht entfernt werden kann.

Naturgemäß sind im Rahmen der vorliegenden Erfindung vielfache Abwandlungen und Modifikationen möglich.

So können auch andere Lösungsmittel wie z.B. n-Butanol bzw. iso-Butanol verwendet werden. Als Nanopartikel können z.B. auch Silikate, Mineralien, Metalloxide, Kieselsäuren, und/oder Titandioxide verwendet werden.

## Patentansprüche

1. Lüfter mit einer aus einem thermoplastischen Kunststoff gebildeten Komponente (66; 72), welche erhältlich ist durch einen Prozess, der folgende Schritte aufweist:
Eine die Form der Komponente (66, 72) bestimmende Kavität (43) eines Spritzgusswerkzeugs (10, 12) wird mindestens bereichsweise mit einer Lösung (24) aus Nanopartikeln (19) und einem Lösungsmittel benetzt;
man lässt das Lösungsmittel von den benetzten Stellen verdampfen, wobei die Nanopartikel (19) an der Wand der Kavität (43) haften bleiben;
das Spritzgusswerkzeug (10, 12) wird geschlossen;
in die Kavität (43) im geschlossenen Spritzgusswerkzeug (10, 12) wird der thermoplastische Kunststoff (42) eingespritzt, wobei sich die Nanopartikel (19) in die Oberfläche des Kunststoffs (42) einbinden;
die Komponente (66; 72), in deren Oberfläche mindestens bereichsweise die Nanopartikel (19) eingebunden sind, wird der Kavität (43) entnommen.

2. Lüfter nach Anspruch 1, bei welchem die Komponente ein Lüfterrad (72) des Lüfters ist.

3. Lüfter nach Anspruch 2, bei welchem die Nanopartikel (19) in die Flügel (76) des Lüfterrads (72) eingebunden sind.

4. Lüfter nach Anspruch 2 oder 3, bei welchem die Nanopartikel (19) in die Nabe (74) des Lüfterrads (72) eingebunden sind.

5. Lüfter nach einem der vorhergehenden Ansprüche, bei welchem die Komponente das Gehäuse (66) des Lüfters ist.

6. Lüfter nach Anspruch 5, bei welchem das Gehäuse (66) einen Wandabschnitt (68) aufweist, der einen Luftführungskanal definiert, und die Nanopartikel (19) in diesen Wandabschnitt (68) eingebunden sind.

7. Lüfter nach einem der vorhergehenden Ansprüche, bei welchem als Lösungsmittel für die Nanolösung (24) Propanol verwendet wird.
